# EUROPEAN PATENT APPLICATION

(11) **EP 1 793 594 A2**
(43) Date of publication of application: **06.06.2007**
(21) Application number: 06125149.2
(22) Date of filing: 30.11.2006
(51) Int. Cl.: H04N 5/445

(54) **Digital signal receiving apparatus and digital signal transmitting apparatus and method of using the same**

(30) Priority: 02.12.2005 KR 20050117169
(71) Applicant: SAMSUNG ELECTRONICS CO., LTD., Suwon-si, Gyeonggi-do 442-742 (KR)
(72) Inventor: Kim, Je-ik, Yeongtong-gu Suwonsi Gyeonggi-do (KR)
(74) Representative: Brandon, Paul Laurence

(57) **Abstract**

A digital signal receiving apparatus (200) and a digital signal transmitting apparatus (100) are provided. The digital signal receiving apparatus comprises a signal receiver (270) which receives an audio signal having additional information, an audio decoder (213) which decodes the audio signal and a reception controller (290) which controls the audio decoder to extract the additional information from the received audio signal. With this configuration, additional information is included in an audio signal.

## Description

The present invention relates to digital signal receiving apparatus and digital signal transmitting apparatus.

Generally, a conventional digital signal transmitting apparatus transmits a digital signal including additional information such as caption information, and lyrics information, among others to a digital signal receiving apparatus. The digital signal comprises a video signal, an audio signal and a data signal.

The additional information is typically included in the video signal at a 21st scanning line and a 284th scanning line. With the increased use of data broadcasting, the additional information may be included in the data signal.

As described above, the conventional digital signal transmitting apparatus can include the additional information in the video signal and transmits it to the digital signal receiving apparatus. This method allows the conventional digital signal transmitting apparatus to transmit the additional information only when it transmits the video signal to the digital signal receiving apparatus.

Also, the conventional digital signal transmitting apparatus may include the additional information in the data signal and transmits it to the digital signal receiving apparatus. This method may cause the additional information included in the digital signal to be lost. Additional information may comprise audio-signal related information such as the lyrics information which may not be in sync with the audio signal.

Accordingly, there is a need for an improved digital signal receiving apparatus capable of receiving information in a manner so that it is not lost and a digital signal transmitting apparatus to facilitate the inclusion of additional information in an audio signal.

An aim of exemplary embodiments of the present invention is to address at least the above problems and/or disadvantages and to provide at least the advantages described below. Accordingly, it is an aim of an exemplary embodiment of the present invention to provide a digital signal receiving apparatus and a digital signal transmitting apparatus, in which additional information is included in an audio signal.

According to an aspect of the present invention, there is provided a digital signal receiving apparatus, the apparatus comprising: a signal receiver for receiving an audio signal comprising additional information; an audio decoder for decoding the audio signal; and a reception controller for controlling the audio decoder to extract the additional information from the received audio signal.

Suitably, the apparatus further comprises an interface picture generator for generating an interface picture, wherein the reception controller controls the interface picture generator to generate the interface picture comprising the additional information.

Suitably, the audio signal comprises an auxiliary data field comprising the additional information, and the reception controller controls the audio decoder to extract the additional information from the auxiliary data field.

Suitably, the auxiliary data field comprises an auxdata field within an AC3 frame of the audio signal.

Suitably, the additional information is stored in a header field of the audio signal, and the reception controller controls the audio decoder to extract the additional information from the header field.

Suitably, the additional information is stored in a packetized elementary system (PES) header field of the header field, and the reception controller controls the audio decoder to extract the additional information from the PES header field.

Suitably, the additional information is stored in a PES user data field (PES_private_data) of the PES header field, and the reception controller controls the audio decoder to extract the additional information from the PES user data field of the PES header field.

Suitably, the audio signal is mixed with at least one of a video signal and a data signal to be received through the signal receiver, the apparatus further comprising a demultiplexer for dividing the mixed signal into the audio signal and the at least one of the video signal and the data signal.

Suitably, the apparatus further comprises a display unit for displaying the interface picture.

According to another aspect of the present invention, there is provided a digital signal transmitting apparatus, the apparatus comprising: an audio encoder for encoding an audio signal; a signal output unit for outputting the audio signal; and an output controller for controlling the audio encoder to insert additional information in the audio signal when the additional information exists.

Suitably, the audio signal comprises an auxiliary data field which has the additional information, and the output controller controls the audio encoder to insert the additional information in the auxiliary data field.

Suitably, the auxiliary data field comprises an auxdata field within an AC3 frame.

Suitably, the audio signal comprises a header field and the output controller controls the audio encoder to insert the additional information in the header field.

Suitably, the header field comprises a packetized elementary system (PES) header field, and the output controller controls the audio encoder to include the additional information in the PES header field.

Suitably, the PES header field comprises a PES user data field (PES_private_data), and the output controller controls the audio encoder to include the additional information in the PES user data field of the PES header field.

Suitably, the apparatus further comprises a multiplexer for multiplexing and mixing the audio signal and at least one of a video signal and data signal.

Suitably, the audio encoder comprises an AC3 encoder.

According to a third aspect of the present invention, there is provided a method of receiving a digital signal, comprising: receiving an audio signal comprising additional information; decoding the audio signal; and extracting the additional information from the received audio signal.

Suitably, the method further comprises generating an interface picture, wherein the interface picture comprises the additional information.

Suitably, the audio signal comprises an auxiliary data field comprising the additional information, and the extracting of the additional information from the received audio signal comprises extracting the additional information from the auxiliary data field.

Suitably, the auxiliary data field comprises an auxdata field within an AC3 frame of the audio signal.

Suitably, the additional information is stored in a header field of the audio signal, and the extracting of the additional information from the received audio signal comprises extracting the additional information from the header field.

Suitably, the additional information is stored in a packetized elementary system (PES) header field of the header field, and the extracting of the additional information from the received audio signal comprises extracting the additional information from the PES header field.

Suitably, the additional information is stored in a PES user data field (PES_private_data) of the PES header field, and the extracting of the additional information from the received audio signal comprises extracting the additional information from the PES user data field of the PES header field.

Suitably, the audio signal is mixed with at least one of a video signal and a data signal to be received through the signal receiver, the method further comprising dividing the mixed signal into the audio signal and the at least one of the video signal and the data signal.

Suitably, the method further comprises displaying the interface picture thereon.

Suitably, the audio signal is mixed with at least one of a video signal and a data signal to be received through the signal receiver, the method further comprising dividing the mixed signal into the audio signal and the at least one of the video signal and the data signal.

Suitably, the method further comprises displaying the interface picture thereon.

According to a fourth aspect of the present invention, there is provided a digital signal receiving apparatus, the apparatus comprising: a signal receiver for receiving an audio signal comprising additional information; an audio decoder for decoding the audio signal; a reception controller for controlling the audio decoder to extract the additional information from the received audio signal; and an interface picture generator for generating an interface picture; wherein the reception controller controls the interface picture generator to generate the interface picture comprising the additional information.

Suitably, the audio signal comprises an auxiliary data field comprising the additional information, and the reception controller controls the audio decoder to extract the additional information from the auxiliary data field.

Suitably, the auxiliary data field comprises an auxdata field within an AC3 frame of the audio signal.

Suitably, the additional information is stored in a header field of the audio signal, and the reception controller controls the audio decoder to extract the additional information from the header field.

Suitably, a digital signal transmitting apparatus, the apparatus comprising: an audio encoder for encoding an audio signal, wherein the audio signal comprises an auxiliary data field which has additional information; a signal output unit for outputting the audio signal to the outside; and an output controller for controlling the audio encoder to insert the additional information in the audio signal and the auxiliary data field, respectively, when the additional information exists.

Suitably, the audio signal comprises a header field and the output controller controls the audio encoder to insert the additional information in the header field.

Suitably, a method of receiving a digital signal, comprising: receiving an audio signal comprising additional information; decoding the audio signal; extracting the additional information from the received audio signal; and generating an interface picture; wherein the interface picture comprises the additional information.

Other salient features of the invention will become apparent to those skilled in the art from the following detailed description, which, taken in conjunction with the annexed drawings, discloses exemplary embodiments of the invention.

For a better understanding of the invention, and to show how embodiments of the same may be carried into effect, reference will now be made, by way of example, to the accompanying diagrammatic drawings in which:
FIG. 1 is a control block diagram of a digital signal receiving apparatus and a digital signal transmitting apparatus according to an exemplary embodiment of the present invention; and
FIG. 2 is a control flowchart of the digital signal receiving apparatus and the digital signal transmitting apparatus according to an exemplary embodiment of the present invention.

Throughout the drawings, the same drawing reference numerals will be understood to refer to the same elements, features and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

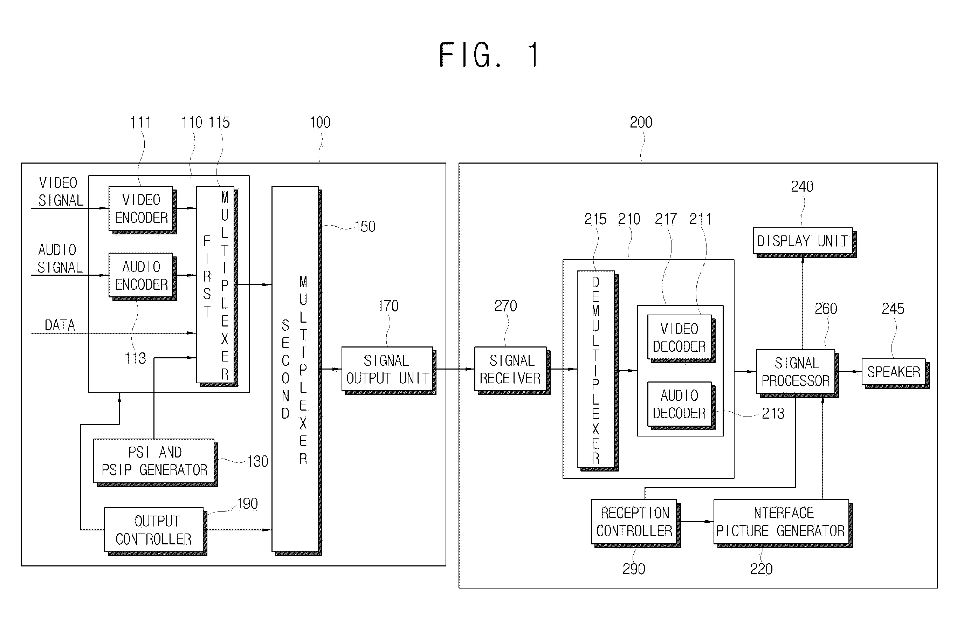

FIG. 1 illustrates a digital signal transmitting apparatus 100 and a digital signal receiving apparatus 200 according to advanced television system committee (ATSC) standards.

The digital signal transmitting apparatus 100, according to an exemplary embodiment of the present invention, outputs a digital signal to the digital signal receiving apparatus 200. According to an exemplary implementation, the digital signal comprises an audio signal. Also, the digital signal may further comprise a video signal or data. The digital signal may further comprise the video signal and the data as well as the audio signal, as an example of an exemplary embodiment of the present invention.

FIG. 1 illustrates the digital signal transmitting apparatus 100 according to an exemplary embodiment of the present invention. The digital signal transmitting apparatus 100 comprises a signal output unit 170, an audio encoder 113 and an output controller 190. The signal output unit 170 outputs the digital signal to the digital signal receiving apparatus 200. The output controller 190 controls the signal output unit 170 and the audio encoder 113. According to an exemplary embodiment of the present invention, the digital signal transmitting apparatus 100 can further comprise a program and system information (PSI) and program and system information protocol (PSIP) generator 130, a second multiplexer 150 and a single program encoder 110 when the digital signal transmitting apparatus 100 comprises a broadcasting source such as a broadcasting station. The single program encoder 110 comprises the audio encoder 113, a video encoder 111 and a first multiplexer 115.

The digital signal transmitting apparatus 100, according to an exemplary embodiment of the present invention, may further comprise an analog/digital (A/D) converter (not shown) to convert an analog audio signal into a digital signal. Thus, the A/D converter outputs the digitalized audio signal to the single program encoder 110.

According to an exemplary implementation, the PSI and PSIP generator 130 generates program association table (PAT) information and a program and system information protocol (PSIP). The PSI and PSIP generator 130 can further generate a table such as a program map table (PMT).

The single program encoder 110 comprises the video encoder 111 and the audio encoder 113. The video encoder 111 encodes the video signal and the audio encoder 113 encodes the audio signal. The single program encoder 110 comprises the first multiplexer 115. The first multiplexer 115 packetizes the video signal encoded by the video encoder 111 and the audio signal encoded by the audio encoder 113. The first multiplexer 115 also multiplexes the packetized data, such as, the video signal and the audio signal. The packetized data is multiplexed to generate a temporary transport stream. The video encoder 111 may comprises an MPEG-2 encoder, and the audio encoder 113 may comprise an AC-3 encoder.

The second multiplexer 150 multiplexes the temporary transport stream supplied by the single program encoder 110 and the data such as the PAT and PSIP supplied by the PSI and PSIP generator 130, and generates a transport stream to output the generated transport stream to the signal output unit 170.

Then, the signal output unit 170 modulates the multiplexed transport stream and outputs it to the digital signal receiving apparatus 200.

The output controller 190 controls the respective elements to insert the additional information in the audio signal when the predetermined additional information exists. Specifically, the output controller 190 controls the audio encoder 113 to encode the additional information together with the audio signal.

According to an exemplary implementation, the additional information may comprise caption data, V-chip data or teletext (TTX) data. The additional information may comprise lyrics, artists and album information.

The output controller 190, according to a first exemplary embodiment of the present invention, may control the audio encoder 113 to insert the additional information in an auxiliary data field (auxdata) presented by AC3 standards of the audio signal for encoding. That is, the auxiliary data field may comprise an auxdata field within an AC3 frame of the audio signal.

The audio signal comprises a syncFrame group which is formed in 32ms as described below.

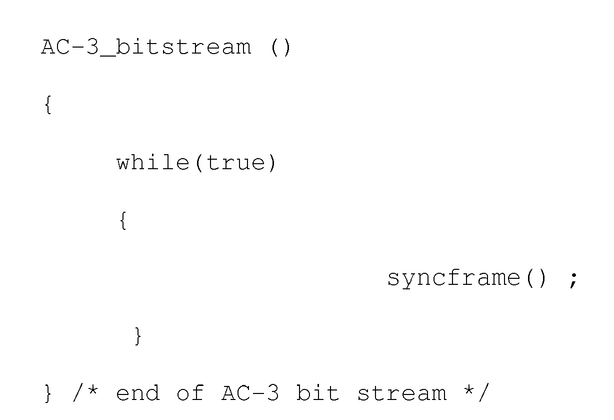

Here, the syncframe comprises a plurality of audio blockrgj auxdata and errorcheck.

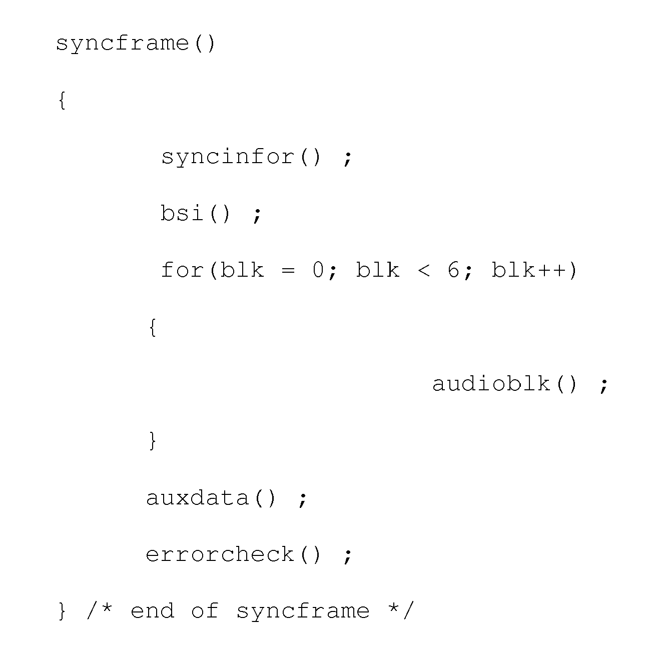

Generally, the caption data of the analog signal occupies a capacity of 120byte/Sec. However, the caption data may be stored in the auxdata field as a capacity of 14bit (2Kbytes/32ms) is provided in the auxdata field. According to an exemplary implementation, the auxdata field may be formed as follows.

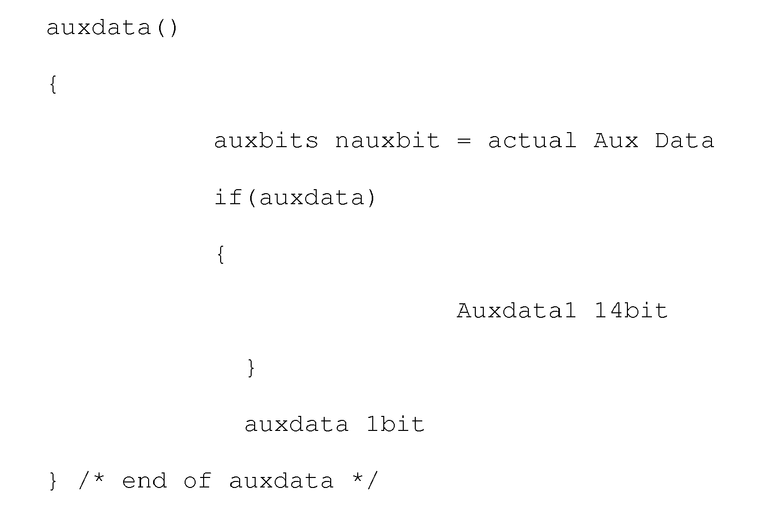

The output controller 190, according to the first exemplary embodiment of the present invention, may control the audio encoder 113 to store the additional information in the auxdata field. According to an exemplary implementation, the audio encoder 113 may be controlled to store the additional information in an "auxbits nauxbits = actual Aux Data" field of the audio signal. The output controller 190 may control the audio signal that has the additional information to be multiplexed together with other signals and output it to the digital signal receiving apparatus 200 through the signal output unit 170.

The output controller 190, according to a second exemplary embodiment of the present invention, may control the audio encoder 113 to insert the additional information in a header field of the audio signal. For example, the output controller 190 may include the additional information in a packetized elementary system (PES) header field of the audio signal.

Specifically, the output controller 190 may control the audio encoder 113 to insert the additional in PES_private_data of PES_private_data_frag among the PES header field. That is, "1" is set as an indicator within the PES_private_data_frag, and the additional information is inserted to the private data field of the PES header field. According to an exemplary implementation, the digital receiving apparatus 200 determines that the private data is stored when "1" is set as the indicator of the PES_private_data_frag by the AC3 standards. When "0" is set as the indicator of the PES_private_data_frag by the AC3 standards, the digital receiving apparatus 200 determines that the private data is not stored.

According to the second exemplary embodiment of the present invention, the output controller 190 may control the audio encoder 113 to include the additional information in the PES header field of the audio signal. Particularly, the output controller 190 may control the audio encoder 113 to include the additional information in the PES_private_data of the PES_private_data_frag among the PES header field.

The digital signal receiving apparatus 200, according to an exemplary embodiment of the present invention, comprises a signal receiver 270, an audio decoder 213 and a reception controller 290 which controls the foregoing elements. The digital signal receiving apparatus 200, according to an exemplary embodiment of the present invention, may further comprise an interface picture generator 220, a signal processor 260, a display unit 240 and a program decoder 210 which comprises the audio decoder 213, a video decoder 211 and a demultiplexer 215.

The signal receiver 270 receives the digital signal received from the digital signal transmitting apparatus 100 through an antenna. When the digital signal comprises a broadcasting signal, the signal receiver 270 may comprise a tuner (not shown) and a demodulator (not shown). According to an exemplary implementation, the digital signal comprises the audio signal.

As described above, the digital signal may further comprise at least one of the video signal and data.

The tuner tunes the received digital signal into a digital signal corresponding to a channel selected according to a tuning control signal of the reception controller 290. The demodulator demodulates the digital signal of a certain channel tuned by the tuner and corrects an error so that the signal may be output.

The program decoder 210 comprises the demultiplexer 215, the video decoder 211 and the audio decoder 213.

According to an exemplary implementation, the demultiplexer 215 divides the multiplexed digital signal into a video signal, an audio signal and data to output the signals. The audio decoder 213 decodes the audio signal demultiplexed by the demultiplexer 215. The video decoder 211 decodes the video signal demultiplexed by the demultiplexer 215.

According to an exemplary implementation, when additional information is included in the audio signal, the audio decoder 213 may extract the additional information therefrom while decoding the audio signal according to the control of the reception controller 290 (to be described later).

The interface picture generator 220 generates a predetermined interface picture to be displayed on the display unit 240 and outputs it to the signal processor 260 according to the control of the reception controller 290 (to be described later).According to an exemplary implementation, the interface picture generator 220 may generate an interface picture which has contents on the additional information included in the audio signal.

The signal processor 260 processes the digital signal decoded by the program decoder 210 and outputs it to the display unit 240, and processes the audio signal decoded by the program decoder 210 and outputs it to the speaker 245.According to an exemplary implementation, the signal processor 260 comprises a scaler which converts the digital signal in consideration of a vertical frequency, resolution, and picture ratio, among others to conform to output standards of the display unit 240. The signal processor 260 mixes the interface picture generated by the interface picture generator 220 with the video signal processed by the signal processor 260 and outputs it to the display unit 240.

The display unit 240 receives the signal processed by the signal processor 260 to display an image thereon. The display unit 240 comprises a display module (not shown) which displays an image thereon; and a module driver (not shown) which processes the signal input from the signal processor 260 and displays an image on the display module. According to an exemplary implementation, the display module may comprise various display modules such as a cathode ray tube (CRT), a digital light processing (DLP), a liquid crystal display (LCD) and a plasma display panel (PDP).

When the DLP is provided as the display module, the module driver may comprise an optical engine. When the LCD is provided as the display module, the module driver may comprise a printed circuit board (PCB) which converts the signal input from the signal processor 260 into a data signal and a gate signal. The display unit 240 may vary based on the type of the display modules.

When the digital signal is received from the digital signal transmitting apparatus 100 through the signal receiver 270, the reception controller 290 controls the respective elements to process the audio signal included in the digital signal and to output a sound to the speaker 245, and to process the video signal included in the digital signal and to display an image on the display unit 240.

According to an exemplary implementation, the output controller 190 extracts the additional information from the audio signal in an opposite method of inserting the additional information in the audio signal by the reception controller 290. Accordingly, a description of the output controller 190 which is similar to that of the reception controller 290 will be omitted.

When the additional information is included in the audio signal, the reception controller 290 controls the audio decoder 213 to extract the additional information included in the audio signal while decoding the audio signal.

When the additional information is included in the auxiliary data field (auxdata field) of the audio signal, according to the first exemplary embodiment of the present invention, the reception controller 290 may control the audio decoder 213 to extract the additional information from the auxiliary data field. As described above, when the additional information is included in the auxdata field, particularly, in the "auxbits nauxbits = actual Aux Data" field among the audio signal, the reception controller 290 may extract the additional information form the auxbits nauxbits among the auxdata field.

When the additional information is included in the header field of the audio signal, according to the second exemplary embodiment of the present invention, the reception controller 290 may control the audio decoder 213 to extract the additional information from the header field of the audio signal. According to an exemplary implementation, when the additional information is stored in the PES header field of the header field, the reception controller 290 may control the audio decoder 213 to extract the additional information from the PES header field. Particularly, when the additional information is stored in the PES user data field (PES_private_data) of the PES header field, the reception controller 290 may control the audio decoder 213 to extract the additional information from the PES user data field of the PES header field.

As described in a description of the output controller 190, the reception controller 290 determines whether the indicator in the PES_private_frag is "1" and may control the audio decoder 213 to extract the private data when it is determined that the indicator is "1", since the reception controller 290 determines that the private data is stored when the indicator in the PES_private_data_frag is set as "1".

When the additional information is extracted from the audio signal, the reception controller 290 reads the additional information. The reception controller 290 controls the interface picture generator 220 to generate the interface picture comprising the additional read information. The reception controller 290 also controls the display unit 240 to display the interface picture generated by the interface picture generator 220 thereon. The digital signal receiving apparatus 200, according to an exemplary embodiment of the present invention, comprises a user selection unit (not shown).The reception controller 290 may control the respective elements to display the interface picture that comprises the additional information on the display unit 240 only when a user outputs a predetermined selection signal through the user selection unit or sets a predetermined additional information display mode.

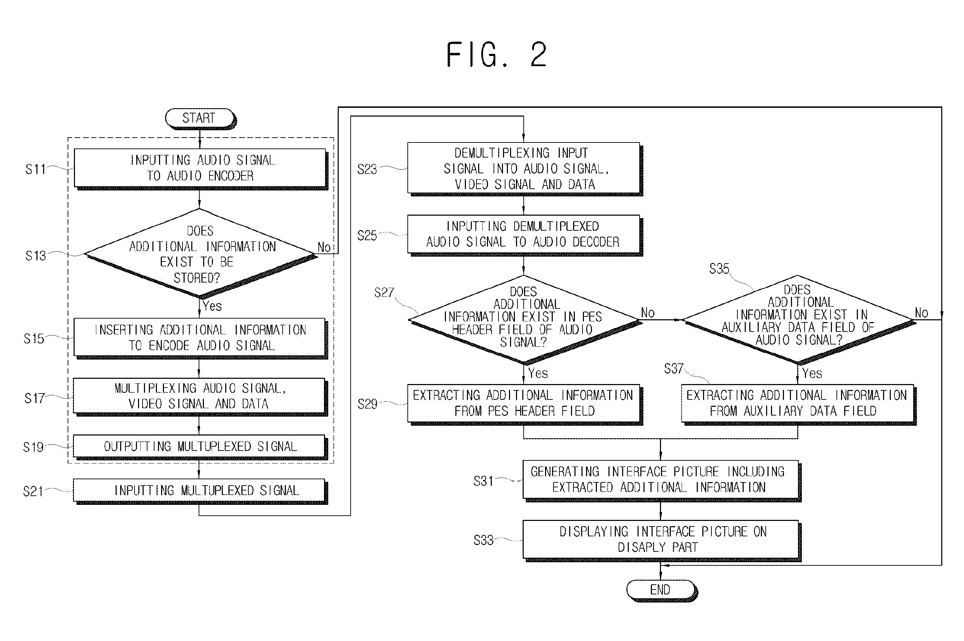

As illustrated in FIG. 2, the output controller 190 of the digital signal transmitting apparatus 100 controls the audio encoder 113 to insert the additional information in the audio signal and to encode it (S15) when the audio signal is input to the audio encoder 113 (S11) and when the additional information which is to be inserted to the audio signal exists (S13). The output controller 190 of FIG. 1 may insert the additional information in the auxiliary data field or to the header field of the audio signal.

When the digital signal transmitting apparatus 100 outputs the video signal or the data to the digital signal receiving apparatus 200, other than the audio signal, the output controller 190 controls the first and second multiplexers 115 and 150 to multiplex the audio and video signals and the data (S17). The output controller 190 of the digital signal transmitting apparatus 100 controls the digital signal multiplexed by the second multiplexer 150 to be output through the signal output unit 170 (S19). The steps S11 to S19 illustrate a control flow of the digital signal transmitting apparatus 100 according to an exemplary embodiment of the present invention.

When the multiplexed digital signal is input through the signal receiver 270 (S21), the input digital signal is supplied to the demultiplexer 215 to be demultiplexed (S23). When the multiplexed digital signal comprises the video signal, the audio signal and the data, the demultiplexer 215 divides the digital signal into the video and audio signals and the data. The demultiplexed signals are supplied to the concerned decoders. Thus, the demultiplexed audio signal is supplied to the audio decoder 213 (S25).

When the additional information is included in the audio signal, the reception controller 290 controls the audio decoder 213 to extract the additional information from the audio signal. According to an exemplary implementation, the reception controller 290 controls the audio decoder 213 through a method described with reference to FIG. 2.

When the additional information exists in the header field, for example, in the PES header field of the audio signal (S27), the reception controller 290, according to the first exemplary embodiment of the present invention controls the audio decoder 213 to extract the additional information from the PES header field (S29). After the additional information extracted by the audio decoder 213 is read, the reception controller 290 parses and analyzes the additional information. The reception controller 290 controls the interface picture generator 220 to generate the interface picture that has additional information extracted from the audio signal (S31), and displays the generated interface picture on the display unit 240 (S33).

According to another exemplary embodiment of the present invention, the reception controller 290 extracts the additional information from the auxiliary data field of the audio signal (S37) when the additional information is included in the auxiliary data field of the audio signal (S35). The reception controller 290 controls the interface picture generator 220 to generate the interface picture that has the additional information extracted from the audio signal (S31), and displays the generated interface picture on the display unit 240 (S33). The steps S21 to S37 illustrate a control flow of the digital signal receiving apparatus 200 according to an exemplary embodiment of the present invention.

As described above, the digital signal transmitting apparatus 100 and the digital signal receiving apparatus 200, according to an exemplary embodiment of the present invention, include the additional information in the audio signal. Accordingly, additional information is in sync with the audio signal when the additional information comprises audio signal-related information. When the additional information is included in the data, the additional information may be changed or damaged when the data information such as PSIP and PSI is changed. However, when the additional information is included in the audio signal, the additional information is not changed or damaged.

The digital signal, according to an exemplary embodiment of the present invention, conforms to the ATSC standard, but is not limited thereto. Alternatively, various devices can be applicable as long as they convert the analog audio signal into the digital audio signal and transmit and receive it. The digital signal, according to an exemplary embodiment of the present invention, is processed as a program stream (PS) as well as a transport stream (TS) to be transmitted/received with respect to the digital signal transmitting apparatus 100 and the digital signal receiving apparatus 200.

As described above, an exemplary embodiment of the present invention provides a digital signal receiving apparatus which includes additional information in an audio signal, and a digital signal transmitting apparatus.

When the digital signal does not comprise a video signal, the additional information can be added to the audio signal. When the additional information comprises audio signal-related information, it can be in sync with the audio signal without difficulty.

While the present invention has been shown and described with reference to certain exemplary embodiments thereof, it will be understood by those skilled in the art that various changes in form and details may be made therein without departing from the spirit and scope of the invention as defined by the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital signal receiving apparatus (200), the apparatus comprising:
a signal receiver (270) for receiving an audio signal comprising additional information;
an audio decoder (213) for decoding the audio signal; and
a reception controller (290) for controlling the audio decoder to extract the additional information from the received audio signal.

2. The apparatus (200) according to claim 1, further comprising
an interface picture generator (220) for generating an interface picture, wherein
the reception controller (290) controls the interface picture generator to generate the interface picture comprising the additional information.

3. The apparatus (200) according to claim 2, wherein the audio signal comprises an auxiliary data field comprising the additional information, and the reception controller (290) controls the audio decoder (213) to extract the additional information from the auxiliary data field.

4. The apparatus (200) according to claim 3, wherein the auxiliary data field comprises an auxdata field within an AC3 frame of the audio signal.

5. The apparatus (200) according to claim 2, wherein the additional information is stored in a header field of the audio signal, and the reception controller (290) controls the audio decoder (213) to extract the additional information from the header field.

6. The apparatus (200) according to claim 5, wherein the additional information is stored in a packetized elementary system (PES) header field of the header field, and the reception controller (290) controls the audio decoder (213) to extract the additional information from the PES header field.

7. The apparatus (200) according to claim 6, wherein the additional information is stored in a PES user data field (PES_private_data) of the PES header field, and the reception controller (290) controls the audio decoder (213) to extract the additional information from the PES user data field of the PES header field.

8. The apparatus (200) according to claim 3 or claim 5, wherein the audio signal is mixed with at least one of a video signal and a data signal to be received through the signal receiver, the apparatus further comprising
a demultiplexer (215) for dividing the mixed signal into the audio signal and the at least one of the video signal and the data signal.

9. The apparatus (200) according to claim 8, further comprising a display unit (240) for displaying the interface picture.

10. A digital signal transmitting apparatus (100), the apparatus comprising:
an audio encoder (113) for encoding an audio signal;
a signal output unit (170) for outputting the audio signal; and
an output controller (190) for controlling the audio encoder to insert additional information in the audio signal when the additional information exists.

11. The apparatus (100) according to claim 10, wherein the audio signal comprises an auxiliary data field which has the additional information, and the output controller (190) controls the audio encoder (113) to insert the additional information in the auxiliary data field.

12. The apparatus (100) according to claim 11, wherein the auxiliary data field comprises an auxdata field within an AC3 frame.

13. The apparatus (100) according to claim 10, wherein the audio signal comprises a header field and the output controller (190) controls the audio encoder (113) to insert the additional information in the header field.

14. The apparatus (100) according to claim 13, wherein the header field comprises a packetized elementary system (PES) header field, and the output controller (190) controls the audio encoder (113) to include the additional information in the PES header field.

15. The apparatus (100) according to claim 14, wherein the PES header field comprises a PES user data field (PES_private_data), and the output controller (190) controls the audio encoder (113) to include the additional information in the PES user data field of the PES header field.

16. The apparatus (100) according to claim 11 or claim 13, further comprising
a multiplexer (150) for multiplexing and mixing the audio signal and at least one of a video signal and data signal.

17. The apparatus (100) according to claim 16, wherein the audio encoder (113) comprises an AC3 encoder.

18. A method of receiving a digital signal, comprising:
receiving an audio signal comprising additional information;
decoding the audio signal; and
extracting the additional information from the received audio signal.

19. The method according to claim 18, further comprising
generating an interface picture, wherein
the interface picture comprises the additional information.

20. The method according to claim 19, wherein the audio signal comprises an auxiliary data field comprising the additional information, and the extracting of the additional information from the received audio signal comprises extracting the additional information from the auxiliary data field.

21. The method according to claim 20, wherein the auxiliary data field comprises an auxdata field within an AC3 frame of the audio signal.

22. The method according to claim 19, wherein the additional information is stored in a header field of the audio signal, and the extracting of the additional information from the received audio signal comprises extracting the additional information from the header field.

23. The method according to claim 22, wherein the additional information is stored in a packetized elementary system (PES) header field of the header field, and the extracting of the additional information from the received audio signal comprises extracting the additional information from the PES header field.

24. The method according to claim 23, wherein the additional information is stored in a PES user data field (PES_private_data) of the PES header field, and the extracting of the additional information from the received audio signal comprises extracting the additional information from the PES user data field of the PES header field.

25. The method according to claim 19, wherein the audio signal is mixed with at least one of a video signal and a data signal to be received through the signal receiver, the method further comprising
dividing the mixed signal into the audio signal and the at least one of the video signal and the data signal.

26. The method according to claim 25, further comprising displaying the interface picture thereon.

27. The method according to claim 22, wherein the audio signal is mixed with at least one of a video signal and a data signal to be received through the signal receiver, the method further comprising
dividing the mixed signal into the audio signal and the at least one of the video signal and the data signal.

28. The method according to claim 9, further comprising displaying the interface picture thereon.
